(19) Europäisches Patentamt
European Patent Office
Office européen des brevets

(11) EP 2 987 406 A1

(12) **EUROPÄISCHE PATENTANMELDUNG**

(43) Veröffentlichungstag:
24.02.2016 Patentblatt 2016/08

(51) Int Cl.:
*A01N 37/34* (2006.01)          *A01N 43/40* (2006.01)
*A01N 59/16* (2006.01)          *A01P 1/00* (2006.01)

(21) Anmeldenummer: 14181920.1

(22) Anmeldetag: 22.08.2014

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **LANXESS Deutschland GmbH
50569 Köln (DE)**

(72) Erfinder: **Die Erfindernennung liegt noch nicht vor**

(54) **Zusammensetzung enthaltend 1,2-Dibrom-2,4-dicyanobutan (DBDCB) und Zinkpyrithion (ZPT)**

(57) Zusammensetzung, dadurch gekennzeichnet, dass sie 1,2-Dibrom-2,4-dicyanobutan (DBDCB) und Zinkpyrithion (ZPT) als wirksame Komponenten enthält.

EP 2 987 406 A1

**Beschreibung**

Gegenstand der vorliegenden Anmeldung ist eine Zusammensetzung enthaltend 1,2-Dibrom-2,4-dicyanobutan (DBDCB) und Zinkpyrithion (ZPT), Verfahren zur Herstellung der erfindungsgemäßen Zusammensetzung und deren Verwendung zum Schutz technischer Materialien vor Befall und/oder Zerstörung durch Mikroorganismen sowie technische Materialien enthaltend die erfindungsgemäße Zusammensetzung.

1,2-Dibrom-2,4-dicyanobutan (DBDCB, "Tektamer 38") ist ein seit langem in der Praxis verwendeter Biozidwirkstoff zur Herstellung antimikrobiell wirksamer Formulierungen zur Bekämpfung von schädlichen Bakterien, Pilzen oder Hefen in technischen oder kosmetischen Zubereitungen. Dieser Wirkstoff verfügt grundsätzlich über eine breite antimikrobielle Wirkung gegen Mikroorganismen wie Bakterien, Pilze oder Hefen und zeichnet sich vorteilhaft durch eine gute Verträglichkeit in vielen zu schützenden Produkten aus. Allerdings ist die Wirkhöhe in manchen Anwendungen aufgrund der relativ hohen Lipophilie von DBDCB nicht immer zufriedenstellend und infolgedessen können die zur Erzielung einer guten Konservierung erforderlichen Einsatzkonzentrationen in einem unter wirtschaftlichen Gesichtspunkten ungünstigen Bereich liegen. Somit besteht ein Bedürfnis danach, die breite antimikrobielle Wirksamkeit von DBDCB bei Einsatz in geringeren Mengen nutzen zu können.

In US 4,830,657 sind Mischungen aus DBDCB und dem Biozid 1,2-Benzisothiazolin-3-on (BIT) beschrieben. In den wirksamen Biozid-Mischungen ist die Menge an BIT jedoch zu hoch, um den regulatorischen Begrenzungen hinsichtlich der maximal erlaubten, deklarationsfreien BIT-Menge zu entsprechen (max. 49 ppm BIT gemäß der 2. Änderungsverordnung der CLP Verordnung 1272/2008, Nr. 286/2011 vom 10.03.2011, Official Journal of the European Union, S. 33; CLP Verordnung 1272/2008, Nr. 1272/2008 vom 16.12.2008, Official Journal of the European Union, S. 688).

Ein weiterer Biozidwirkstoff mit einer breiten antimikrobiellen Wirksamkeit gegen Bakterien, Schimmelpilze, Hefen und Algen ist Zinkpyrithion (Zink-bis[2-pyridinthiolat]-N,N'-dioxid; Zink-2-pyridinethion-l-oxid; ZPT). Auch bei ZPT führt seine relativ hohe Lipophilie in der Praxis dazu, dass die an sich gute Wirksamkeit von Zinkpyrithion nicht immer in dem erwünschten Ausmaß zur Entfaltung kommen kann. Die Anforderungen an ein voll umfänglich einsetzbares Biozidprodukt werden von ZPT als alleiniger biozider Wirkstoff daher nicht in allen Anwendungen erfüllt.

In der Anmeldung WO 2012130822 A1 werden Mischungen aus ZPT und 1,2-Benzisothiazolinonen (BIT) beschrieben. Auch hier ist jedoch die für eine zufriedenstellende biozide Wirksamkeit notwendige Menge an BIT so hoch, dass die deklarationsfreie BIT-Menge überschritten wird (es gilt Analoges wie oben erwähnt).

Es besteht daher weiterhin ein Bedarf an verbesserten Produktkombinationen, um das an sich gegebene antimikrobielle Wirkspektrum von DBDCB bzw. von ZPT zu optimieren.

Überraschenderweise wurden nun eine Zusammensetzung auf Basis von 1,2-Dibrom-2,4-dicyanobutan (DBDCB) und Zinkpyrithion (ZPT) gefunden, die die Nachteile der jeweiligen Einzelkomponenten in vorteilhafter Weise überwindet. Des Weiteren zeigt die erfindungsgemäße Zusammensetzung überraschender Weise einen synergistischen Effekt.

Die vorliegende Erfindung betrifft daher eine Zusammensetzung, die dadurch gekennzeichnet ist, dass sie 1,2-Dibrom-2,4-dicyanobutan (DBDCB) und Zinkpyrithion (ZPT) als wirksame Komponenten enthält.

Die relativen Verhältnisse von DBDCB und ZPT in der erfindungsgemäßen Zusammensetzung können über einen weiten Bereich variieren. Bevorzugt ist das Gewichtsverhältnis von DBDCB zu ZPT in der Zusammensetzung 100:1 bis 1:100, besonders bevorzugt 50:1 bis 1:50, ganz besonders bevorzugt 10:1 bis 1:10, noch weiter bevorzugt 4:1 bis 1:4.

Des Weiteren liegen in der erfindungsgemäßen Zusammensetzung bevorzugt wenigstens 60 Gew.%, besonders bevorzugt wenigstens 80 Gew.%, ganz besonders bevorzugt wenigstens 90 Gew.%, noch weiter bevorzugt von wenigstens 95 Gew.% der Summe der wirksamen Komponenten DBDCB und ZPT gelöst vor.

Darüber hinaus zeichnet sich die erfindungsgemäße Zusammensetzung überraschend dadurch aus, dass sie in spezifischen Mischungsverhältnissen eine unerwartet hohe, synergistische Wirkungssteigerung aufweist. Daraus folgt, dass die zum Schutz technischer Produkte benötigten Einsatzkonzentrationen im Falle der erfindungsgemäßen Zusammensetzung, verglichen mit den nötigen Konzentrationen im Falle der jeweiligen Einzelwirkstoffe, herabgesetzt werden können. Dies ist unter ökonomischen, ökologischen und anwendungstechnischen Gesichtspunkten ausgesprochen vorteilhaft und stellt einen Beitrag zur Erhöhung der Konservierungsqualität dar.

**Weitere biozide Wirkstoffe**

Die erfindungsgemäße Zusammensetzung kann neben DBDCB und ZPT zusätzlich keinen oder wenigstens einen weiteren bioziden Wirkstoff enthalten.

Bevorzugt enthält die erfindungsgemäße Zusammensetzung DBDCB, ZPT und zusätzlich wenigstens einen weiteren bioziden Wirkstoff.

Als bevorzugte weitere biozide Wirkstoffe seien die folgenden Wirkstoffe genannt:

Benzalkoniumchlorid

1,2-Benzisothiazol-3(2H)-on (BIT)

Benzylalkohol

2-Bromo-2-nitropropan-1 3-diol (Bronopol)

Bromochlorodimethylhydantoin

5-Chloro-2-methyl-4-isothiazolin-3-on / 2-Methyl-4-isothiazolin-3-on (CMIT/MIT)

2,2-Dibromo-3-nitrilopropionamid (DBNPA)

Diazolidinylharnstoff

3,3-Dimethylol-5,5-dimethylhydantoin (DMDMH)

Dichlorbenzylalkohol

Di-decyl-di-methyl-ammoniumchlorid

Dimethylolhydantoin

4,4-Dimethyl-1,3-oxazolidin

Ethylenglykol-bis-hemiformal

Imidazolidinylharnstoff

Iodpropargylbutylcarbamat (IPBC)

2-n-Octylisothiazolin-3-on (OIT)

Phenoxyethanol

Phenyl-ethyl-alkohol

o-Phenyl-phenol (OPP)

Poly(hexamethylenebiguanide) hydrochloride (PHMB)

Tetramethylolacetylendiharnstoff (TMAD)

Besonders bevorzugt enthält die erfindungsgemäße Zusammensetzung wenigstens einen weiteren bioziden Wirkstoff ausgewählt aus der Gruppe bestehend aus 1,2-Benzisothiazol-3(2H)-on (BIT), Iodpropargylbutylcarbamat (IPBC) und 2-n-Octylisothiazolin-3-on (OIT).
Das Gewichtsverhältnis des wenigstens einen weiteren bioziden Wirkstoffs zu der Summe von DBDCB und ZPT ist bevorzugt 1: 2 bis 1 : 100.
In der erfindungsgemäßen Zusammensetzung kann die Summe der Gew.% von DBDCB, ZPT und des zusätzlich keinen oder wenigstens einen weiteren bioziden Wirkstoffs in einem breiten Bereich variiert werden.
Bevorzugt beträgt die Summe von DBDCB, ZPT und des zusätzlich keinen oder wenigstens einen weiteren bioziden Wirkstoffs 1 bis 80 Gew.%, besonders bevorzugt 5 bis 40 Gew.%, bezogen auf das Gesamtgewicht der erfindungsgemäßen Zusammensetzung.

**Weitere Zusatzstoffe**

Die erfindungsgemäße Zusammensetzung kann keinen oder wenigstens einen weiteren Zusatzstoff enthalten.

Bevorzugt enthält die erfindungsgemäße Zusammensetzung wenigstens einen weiteren Zusatzstoff.

Besonders bevorzugt enthält die erfindungsgemäße Zusammensetzung wenigstens Zinkoxid (ZnO) als einen weiteren Zusatzstoff.

Das Gewichtsverhältnis von ZnO zu der Summe der Komponenten DBDCB, ZPT und gegebenenfalls wenigstens eines weiteren bioziden Wirkstoffs kann über einen weiten Bereich variieren. Bevorzugt ist das Gewichtsverhältnis von ZnO zu der Summe der Komponenten DBDCB, ZPT und gegebenenfalls wenigstens eines weiteren bioziden Wirkstoffs 1: 1 bis 1 : 10.

Ein Vorteil der bevorzugten erfindungsgemäßen Zusammensetzung, die ZnO enthält, besteht in dem Schutz vor etwaigen Verfärbungen.

Die Applikation der erfindungsgemäßen Zusammensetzung kann, in Abhängigkeit von ihren jeweiligen physikalischen und/oder chemischen Eigenschaften bzw. den spezifischen Erfordernissen des zu lösenden Konservierungsproblems, entweder separat in Form einer Zudosierung der Einzelwirkstoffe erfolgen, wobei je nach vorliegendem Konservierungsproblem eine individuelle Einstellung des Konzentrationsverhältnisses vorgenommen werden kann, oder es kann die Zudosierung der erfindungsgemäßen Zusammensetzung als Formulierung erfolgen.

Bevorzugt liegt die erfindungsgemäße Zusammensetzung als Formulierung vor.

Besonders bevorzugt liegt die erfindungsgemäße Zusammensetzung als Formulierung vor, die eine Lösung, eine Dispersion, eine Emulsion, eine Suspension, ein Pulver, ein Schaum, eine Paste, ein Granulat, Aerosol oder eine feinstverkapselter Form in polymeren Stoffen ist.

Die erfindungsgemäße Zusammensetzung kann daher weiterhin wenigstens ein Hilfsmittel, das geeignet zur Herstellung einer Formulierung ist, als weiteren Zusatzstoff enthalten oder nicht enthalten.

Bevorzugt enthält die erfindungsgemäße Zusammensetzung wenigstens ein Hilfsmittel als weiteren Zusatzstoff.

Bevorzugte Hilfsmittel der vorliegenden Erfindung sind grenzflächenaktive Stoffe, Benetzungsmittel, Emulgatoren, Dispergiermittel, Stabilisatoren, Haftmittel, Verdicker, Spreitmittel, organische Lösungsmittel, Duftstoffe, Farbmittel, Entstaubungsmittel, Puffersubstanzen, Puffersysteme, pH-Wert-Regulatoren, feste Trägerstoffe und Wasser.

Besonders bevorzugt als Hilfsmittel der vorliegenden Erfindung ist Wasser.

Bevorzugt enthält die erfindungsgemäße Zusammensetzung wenigstens ein Hilfsmittel ausgewählt aus der Gruppe bestehend aus grenzflächenaktive Stoffe, Benetzungsmittel, Emulgatoren, Dispergiermittel, Stabilisatoren, Haftmittel, Verdicker, Spreitmittel, organische Lösungsmittel, Duftstoffe, Farbmittel, Entstaubungsmittel, Puffersubstanzen, Puffersysteme, pH-Wert-Regulatoren, feste Trägerstoffe und Wasser, besonders bevorzugt Wasser.

In einer bevorzugten erfindungsgemäßen Zusammensetzung, in der mehrere Hilfsmittel aus obiger Gruppe ausgewählt sind, sind diese Hilfsmittel voneinander verschieden.

Im Folgenden sind die bevorzugten Hilfsmittel der vorliegenden Erfindung beispielhaft näher ausgeführt:

- Grenzflächenaktive Stoffe, wie beispielsweise Tenside. Tenside können beispielsweise nichtionische, kationische und amphotere Tenside, vorzugsweise anionische Tenside sein. Geeignete anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, z.B. Natrium, Kalium, Magnesium, Calcium, sowie Ammonium- und Triethanolamin-Salze. Die Alkylethersulfate, Alkyletherphosphate und Alkylethercarboxylate können jeweils beispielsweise zwischen 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat, Triethanolamindodecyl-benzolsulfonat.

- Benetzungsmittel, wie beispielsweise Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether-und Fettalkoholsulfaten, sowie Salze sulfatierter Hexa-, Hepta-und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose.

- Emulgatoren, wie beispielsweise Natrium-, Kalium- und Ammoniumsalze von gradkettigen aliphatischen Carbonsäuren der Kettenlänge $C_{12}$-$C_{20}$, Natriumhydroxyoctadecansulfonat, Natrium-, Kalium- und Ammoniumsalze von Hydroxyfettsäuren der Kettenlänge $C_{12}$-$C_{20}$ und deren Sulfierungs-bzw. Acetylierungsprodukte, Alkylsulfate, auch als Triethanolaminsalze, Alkyl-($C_{10}$-$C_{20}$)-sulfonate, Alkyl($C_{10}$-$C_{20}$)-arylsulfonate, Dimethyldialkyl($C_8$-$C_{18}$)-ammoni-

4

umchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge $C_4$-$C_{16}$, Sulfobernsteinsäure-4-Ester mit Polyethylenglykolethern von einwertigen aliphatischen Alkoholen der Kettenlänge $C_{10}$-$C_{12}$ (Di-Natrium-salz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium-und Ammoniumsalze, Polyoxyethylensorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol.

- Dispergiermittel, wie beispielsweise Alkylphenolpolyglycolether.

- Stabilisatoren, wie z.B. Cellulose und Cellulosederivate.

- Haftmittel und Verdicker, wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipid sowie mineralische oder pflanzliche Öle.

- Spreitmittel, wie beispielsweise Isopropylmyristat, Polyoxyethylennonylphenylether und Polyoxyethylenlaurylphenylether.

- Organische Lösungsmittel, wie beispielsweise ein- oder mehrwertige Alkohole, Ester, Ketone und Kohlenwasserstoffe. Beispiele für geeignete Lösungsmittel sind Paraffine, z.B. Erdölfraktionen, mineralische und pflanzliche Öle, Butanol oder Glykol sowie deren Ether und Ester, Ketone wie Aceton, Methylethylketon, Methylisobutylketon oder Cyclohexanon.

- Duftstoffe, Farbmittel, wie anorganische Pigmente, z.B. Eisenoxid, Titanoxid, Ferrocyanblau und organische Farbmittel, wie Alizarin-, Azo- und Metallphthalocyaninfarbmittel und Spurennährstoffe wie Salze von Eisen, Mangan, Bor, Kupfer, Kobalt, Molybdän und Zink.

- Entstaubungsmittel, wie beispielsweise Polyglykole und Polyglykolether. Die zumindest im Wesentlichen festen Formulierungen können dabei beispielsweise jeweils 0,01 bis 2, vorzugsweise 0,05 bis 1, besonders bevorzugt 0,1 bis 0,5 Gew.-% an Entstaubungsmitteln enthalten.

- Puffersubstanzen, Puffersysteme oder pH-Wert-Regulatoren. Die zumindest im Wesentlichen festen Formulierungen können dabei beispielsweise jeweils 0,01 bis 10, vorzugsweise 0,1 bis 5, Gew.-% an Puffersubstanzen, Puffersystemen oder pH-Wert-Regulatoren enthalten.

- Feste Trägerstoffe wie beispielsweise natürliche Gesteinsmehle, wie Kaoline, Tonerden, Talkum, Kreide, Quarz, Attapulgit, Montmorillonit oder Diatomeenerde sowie synthetische Gesteinsmehle, wie hochdisperse Kieselsäure, Aluminiumoxid und Silikate. Als feste Trägerstoffe insbesondere für Granulate sind beispielsweise geeignet: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengen;

- Wasser

Bevorzugt enthält die erfindungsgemäße Zusammensetzung wenigstens Wasser als Hilfsmittel.
In der erfindungsgemäßen Zusammensetzung sind bevorzugt 20-99 Gew.% besonders bevorzugt 60 bis 95 Gew.% wenigstens eines weiteren Zusatzstoffes enthalten, bezogen auf das Gesamtgewicht der erfindungsgemäßen Zusammensetzung.

**Herstellung**

Die Erfindung betrifft weiterhin ein Verfahren zur Herstellung der erfindungsgemäßen Zusammensetzung, dadurch gekennzeichnet, dass man DBDCB und ZPT, gegebenenfalls unter Zugabe wenigstens eines weiteren bioziden Wirkstoffs und gegebenenfalls unter Zugabe wenigstens eines weiteren Zusatzstoffes, miteinander vermischt.

Eine bevorzugte Herstellung der erfindungsgemäßen Zusammensetzung ist dadurch gekennzeichnet, dass man DBDCB und ZPT sowie wenigstens einen weiteren Zusatzstoff, bevorzugt Hilfsmittel, miteinander vermischt.

Eine weitere bevorzugte Herstellung der erfindungsgemäßen Zusammensetzung ist dadurch gekennzeichnet, dass man DBDCB, ZPT, wenigstens einen weiteren biozide Wirkstoff und wenigstens ein Hilfsmittel miteinander vermischt.

Eine besonders bevorzugte Herstellung der erfindungsgemäßen Zusammensetzung ist dadurch gekennzeichnet, dass man DBDCB, ZPT, wenigstens einen weiteren biozide Wirkstoff ausgewählt aus der Gruppe bestehend aus BIT, IPBC und OIT, und wenigstens ein Hilfsmittel miteinander vermischt.

Es gelten für die erfindungsgemäße Herstellung die obigen Angaben bezüglich der weiteren biozide Wirkstoffe, der Zusatzstoffe und Hilfsmittel analog.

## Verwendung

Die Erfindung betrifft weiterhin die Verwendung der erfindungsgemäßen Zusammensetzung zum Schutz von technischen Materialien vor Befall und/oder Zerstörung durch Mikroorganismen.

Bevorzugt sind die technischen Materialien, die unter Verwendung der erfindungsgemäßen Zusammensetzung vor Befall und/oder Zerstörung durch Mikroorganismen geschützt werden sollen, wasserhaltige funktionelle Flüssigkeiten und wasserhaltige technische Produkte.

Beispielhaft, jedoch ohne zu limitieren, sei die Verwendung in folgenden technischen Materialien genannt:

- Anstrichmittel, Farben und Putze auf wässriger Basis

- Bauchemische Produkte wie Betonadditive beispielsweise auf Basis von Melasse, Ligninsulfonaten oder Polyacrylaten, Bitumenemulsionen oder Fugendichtungsmassen

- Druckverdickungsmittel auf Basis natürlicher Rohstoffe wie Alginaten, Guarmehlen, Gummiarabicum, Mais-, Weizen- oder Reisstärken

- Hilfsmittel für die Leder-, Textil- oder fotochemische Industrie

- Kühlschmierstoffkonzentrate und/oder deren wässrige Emulsionen oder Verdünnungen zur Metallverarbeitung auf Basis von Mineralöl-haltigen, halbsynthetischen oder synthetischen Konzentraten

- Leime und Klebstoffe auf Basis der bekannten tierischen, pflanzlichen oder synthetischen Rohstoffe

- Polymerdispersionen auf Basis von z.B. Polyacrylat, Polystrolacrylat, Styrol-butadien, Polyvinylacetat

- Stärke-lösungen oder -slurrys oder andere auf Basis von Stärke hergestellte Produkte wie z.B. Druckverdicker oder Tapetenkleister

- Slurrys anderer Rohstoffe wie Farbpigmente (z.B. Eisenoxidpigmente, Rußpigmente, Titandioxidpigmente) oder Slurrys von Füllstoffen und Streichpigmenten wie Kaolin, Calciumcarbonat oder Talkum

- Vor- und Zwischenprodukte der chemischen Industrie, z.B. bei der Farbmittelproduktion und -lagerung.

- Tinten oder Tuschen

- Wachs- und Tonemulsionen

Besonders bevorzugt wird die erfindungsgemäße Zusammensetzung zum Schutz von Anstrichmittel, Farben und Putze auf wässriger Basis, Bauchemische Produkte z.B Bitumenemulsionen oder Fugendichtungsmassen, Hilfsmittel für die Leder- oder Textilindustrie, Leime und Klebstoffe auf Basis der bekannten tierischen, pflanzlichen oder synthetischen Rohstoffe, Polymerdispersionen auf Basis von z.B. Polyacrylat, Polystrolacrylat, Styrol-butadien, Polyvinylacetat und/ oder Vor- und Zwischenprodukte der chemischen Industrie bei der Farbmittelproduktion und Farbmittellagerung eingesetzt.

Die Anwendungskonzentrationen der erfindungsgemäß zu verwendenden erfindungsgemäßen Mischung richten sich nach der Art und dem Vorkommen der zu bekämpfenden Mikroorganismen, der mikrobiellen Ausgangsbelastung, der zu erwartenden Lagerzeit der zu schützenden Produkte sowie nach der Zusammensetzung der mikrobiologisch anfälligen Endprodukte. Die optimale Einsatzmenge kann durch Vorversuche und Testreihen im Labor in einer dem Fachmann hinlänglich bekannten Weise einfach ermittelt werden.

Bevorzugt wird die erfindungsgemäße Zusammensetzung im Bereich von 0,01 bis 5 Gew.-%, besonders bevorzugt von 0,05 bis 1,0 Gew.-%, bezogen auf das Gewicht des zu schützenden Materials, zum Schutz von technischen Materialien eingesetzt.

Die Erfindung betrifft weiterhin technische Materialien, die mit der erfindungsgemäßen Zusammensetzung behandelt wurden.

Weiter umfasst die vorliegende Erfindung technische Materialien, die eine erfindungsgemäße Zusammensetzung enthalten.

Es gelten für die technischen Materialien die obigen beispielhaft genannten technischen Materialien analog.

Die erfindungsgemäße Zusammensetzung ist wirksam gegen Mikroorganismen der verschiedensten Art, wie z.B. Bakterien, Schimmelpilze, Hefen sowie Schleimorganismen.

Beispielhaft, jedoch ohne zu limitieren, seien die folgenden Arten genannt, gegen die die erfindungsgemäße Zusammensetzung Wirksamkeit aufweist:

Bakterien:

Alcaligenes wie Alcaligenes faecalis, Bacillus wie Bacillus subtilis, Enterobacter wie Enterobacter aerogenes, Escherichia wie Escherichia coli, Proteus wie Proteus vulgaris, Pseudomonas wie Pseudomonas aeruginosa oder Pseudomonas fluorescens, Serratia wie Serratia marescens, Staphylococcus wie Staphylococcus aureus.

Hefen:

Candida wie Candida albicans, Geotrichum wie Geotrichum candidum, Rhodotorula wie Rhodotorula rubra, Rhodotorula mucilaginosa, Saccharomyces wie Saccharomyces cerevisiae.

Pilze:

Acremonium wie Acremonium strictum, Alternaria wie Alternaria tenuis, Aspergillus wie Aspergillus niger, Chaetomium wie Chaetomium globosum, Fusarium wie Fusarium solani, Lentinus wie Lentinus tigrinus, Paecilomyces wie Paecilomyces variotti, Penicillium wie Penicillium glaucum, Trichoderma wie Trichoderma viride.

In den nachfolgenden Beispielen wird die überraschende Wirkungsverstärkung der erfindungsgemäßen Zusammensetzung beispielhaft, ohne zu limitieren, dokumentiert:

**Beispiele**

Der Synergismus der erfindungsgemäßen Zusammensetzung wird im Folgenden beispielhaft gegen bestimmte, insbesondere praxisrelevante Keime wie z.B. *Pseudomonas aeruginosa* (Beispiel 1) gezeigt.

Der gefundene Synergismus der erfindungsgemäßen Zusammensetzung lässt sich über folgenden mathematischen Ansatz ermitteln (vgl. F.C. Kull, P.C. Elisman, H.D. Sylwestrowicz, P.K. Mayer, Appl. Microbiol. 9, S. 538 (1961):

$$\text{synergistischer Index (SI)} = \frac{Q_a}{Q_A} + \frac{Q_b}{Q_B}$$

wobei gilt:

$Q_a$ = Menge Komponente A in der Wirkstoffmischung, die den gewünschten Effekt, d.h. kein mikrobielles Wachstum, erzielt,

$Q_A$ = Menge Komponente A, die allein eingesetzt, das Wachstum der Mikroorganismen unterdrückt,

$Q_b$ = Menge Komponente B in der Wirkstoffmischung, die das Wachstum der Mikroorganismen unterdrückt,

und

$Q_B$ = Menge Komponente B, die allein eingesetzt, das Wachstum der Mikroorganismen unterdrückt.

Ein gemäß obiger Formel resultierender synergistischer Index von SI <1 zeigt für die Wirkstoffmischung einen synergistischen Effekt an. Je geringer der SI ist, desto größer ist der synergistische Effekt.

Beispielhaft, ohne zu limitieren, wird anhand der nachfolgenden Beispiele und Berechnungen die synergistische Wirkungsverstärkung erläutert.

**Beispiel 1: Synergismus gegenüber *Pseudomonas aeruginoasa***

Anhand des Testkeims *Pseudomonas aeruginoasa* wurden die minimalen Hemmkonzentration der in Tabelle 1 aufgeführten erfindungsgemäßen Zusammensetzungen untersucht.

Tabelle 1

| Nr. | DBDCB : ZPT | DBDCB [ppm], $Q_a$ | ZPT [ppm], $Q_b$ | SI |
|---|---|---|---|---|
| 1 | 8:2 | 200 | 50 | 0,91 |
| 2 | 6:4 | 45 | 30 | 0,68 |
| 3 | 5:5 | 37,5 | 37,5 | 0,65 |
| 4 | 4:6 | 30 | 45 | 0,72 |
| 5 | 2:8 | 10 | 40 | 0,57 |
| 6 | 1:9 | 7,5 | 67,5 | 0,93 |
| (Testkeim: *Pseudomonas aeruginosa*, $Q_A$ = 250 ppm DBDCB, $Q_B$ = 75 ppm Zinkpyrithion) | | | | |

Die erfindungsgemäßen Zusammensetzungen weisen in bestimmten Konzentrationsverhältnissen eine ausgeprägte synergistische Wirkung gegen den Testkeim *Pseudomonas aeruginoasa* auf.

**Beispiel 2: Synergismus gegenüber *Enterobacter aerogenes***

Anhand des Testkeims *Enterobacter aerogenes* wurden die minimalen Hemmkonzentration der in Tabelle 2 aufgeführten erfindungsgemäßen Zusammensetzungen untersucht.

Tabelle 2

| Nr. | DBDCB : ZPT | DBDCB [ppm], $Q_a$ | ZPT [ppm], $Q_b$ | SI |
|---|---|---|---|---|
| 1 | 9:1 | 78 | 9 | 0,96 |
| 2 | 6:4 | 30 | 20 | 0,90 |
| 3 | 5:5 | 25 | 25 | 0,75 |
| 4 | 4:6 | 20 | 30 | 0,80 |
| 5 | 2:8 | 10 | 40 | 0,82 |
| (Testkeim: *Enterobacter aerogenes*, $Q_A$ = 100 ppm DBDCB, $Q_B$ = 50 ppm Zinkpyrithion) | | | | |

Die erfindungsgemäßen Zusammensetzungen weisen in bestimmten Konzentrationsverhältnissen eine ausgeprägte synergistische Wirkung gegen den Testkeim *Enterobacter aerogenes* auf.

**Beispiel 3: Synergismus gegenüber *Rhodotorula mucilaginosa***

Mit dem Testkeim *Rhodotorula mucilaginosa* wurden die minimalen Hemmkonzentration der in Tabelle 3 aufgeführten erfindungsgemäßen Zusammensetzungen untersucht.

Tabelle 3

| Nr. | DBDCB : ZPT | DBDCB [ppm], $Q_a$ | ZPT [ppm], $Q_b$ | SI |
|---|---|---|---|---|
| 1 | 9:1 | 22,5 | 2,5 | 0,55 |

(fortgesetzt)

| Nr. | DBDCB : ZPT | DBDCB [ppm], $Q_a$ | ZPT [ppm], $Q_b$ | SI |
|---|---|---|---|---|
| 2 | 8:2 | 20 | 5 | 0,60 |
| 3 | 6:4 | 15 | 10 | 0,70 |
| 4 | 5:5 | 12,5 | 12,5 | 0,75 |
| 5 | 4:6 | 10 | 15 | 0,80 |
| 6 | 2:8 | 5 | 20 | 0,90 |
| 7 | 1:9 | 2,5 | 22,5 | 0,95 |
| (Testkeim: *Rhodotorula mucilaginosa,* $Q_A$ = 50 ppm DBDCB, $Q_B$ = 25 ppm Zinkpyrithion) | | | | |

Die erfindungsgemäßen Zusammensetzungen weisen in bestimmten Konzentrationsverhältnissen eine ausgeprägte synergistische Wirkung gegen den Testkeim (Hefe) *Rhodotorula mucilaginosa* auf.

**Beispiel 4: Mikrobiologischer Belastungstest - Konservierung einer Polymeremulsion**

Untersucht wurde die konservierende Wirkung einer erfindungsgemäßen Zusammensetzung enthaltend DBDCB und ZPT in einer Polymeremulsion (Acrylatbasiert, pH = 6,5) mit Hilfe eines mikrobiologischen Belastungstests.

Mit dem mikrobiologischen Belastungstest wird die Anfälligkeit wasserbasierter Systeme gegen mikrobiellen Befall und die Wirkung von Konservierungsmitteln überprüft. Hierzu werden die Konservierungsmittel in definierten Konzentrationen in die wasserbasierten Systeme eingearbeitet. Nach Abschluss der Vorarbeiten erfolgt über einen Versuchszeitraum von 3 bis maximal 6 Wochen eine Kontamination mit Mikroorganismen definierter Art im wöchentlichen Abstand. 2-3 und 7 Tage nach jeder Kontamination wird durch Keimzahlbestimmung festgestellt, ob vollständige Abtötung oder zumindest Vermehrungshemmung der eingebrachten Mikroorganismen im Vergleich zu den nicht konservierten Kontrollproben eingetreten ist.

In Kenntnis der in Polymeremulsionen- und -Dispersionen vorherrschenden Mikroorganismen-Populationen wurde für den Versuch ein Gemisch der folgenden Mikroorganismenarten für die Prüfung eingesetzt:

Bakterien: *Escherichia coli, Pseudomonas aeruginosa* und *Staphylococcus aureus.*

Schimmelpilze: *Acremonium strictum, Aspergillus niger* und *Geotrichum candidu.*

Hefen: *Candida albicans* und *Rhodotorula rubra.*

Eine sehr gute Wirksamkeit wird erreicht, wenn die konservierten Proben eine vollständige Abtötung (auf 0 Bakterien bzw. Schimmel- bzw. Hefezellen pro/g) der eingebrachten Mikroorganismen bewirken (Bewertung 3 = sehr gut).

Eine gute Wirkung liegt dann vor, wenn im Vergleich zur unkonservierten Probe (sogenannte Nullprobe) ein stark reduziertes Mikrobenniveau beobachtet wird (auf $10^3$-$10^1$ Bakterien bzw. auf $10^2$ - $10^1$ Schimmel- bzw. Hefezellen pro/g) (Bewertung 2 = gut).

Eine mäßige Wirkung liegt dann vor, wenn im Vergleich zur unkonservierten Probe ein leicht reduziertes Mikrobenniveau beobachtet wird (auf $10^4$ - 103 Bakterien bzw. auf $10^3$-$10^2$ Schimmel- bzw. Hefezellen pro/g) (Bewertung 1 = mäßig).

Eine mangelhafte Wirkung liegt dann vor, wenn im Vergleich zur unkonservierten Probe keine oder eine nur geringfügige Reduktion des Mikrobenniveaus beobachtet wird (auf ein Restniveau von mindestens $10^5$ Bakterien bzw. $10^4$ Schimmel- bzw. Hefezellen pro/g) (Bewertung 0 = mangelhaft). Die erzielten Ergebnisse sind in Tabelle 4 angegeben.

Tabelle 4: Wirksamkeit der Biozide, ermittelt jeweils 1 Woche nach Keimzugabe

| Zugegebenes Biozid [Gew.%] | M | Woche 1 | Woche 2 | Woche 3 | Woche 4 | Woche 5 | Woche 6 |
|---|---|---|---|---|---|---|---|
| DBDCB 0,025 | B | 0 | 0 | 0 | 0 | 0 | 0 |
| | S | 0 | 0 | 0 | 0 | 0 | 0 |
| | H | 0 | 0 | 0 | 0 | 0 | 0 |

(fortgesetzt)

| Zugegebenes Biozid [Gew.%] | M | Woche 1 | Woche 2 | Woche 3 | Woche 4 | Woche 5 | Woche 6 |
|---|---|---|---|---|---|---|---|
| DBDCB 0,050 % | B | 0 | 0 | 0 | 0 | 0 | 0 |
| | S | 0 | 0 | 0 | 0 | 0 | 0 |
| | H | 0 | 0 | 0 | 0 | 0 | 0 |
| ZPT 0,05 % | B | 0 | 0 | 0 | 0 | 0 | 0 |
| | S | 2 | 2 | 2 | 2 | 2 | 2 |
| | H | 2 | 2 | 2 | 2 | 2 | 2 |
| DBDCB 0,01 % + ZPT 0,01 % | B | 2 | 2 | 2 | 2 | 2 | 2 |
| | S | 2 | 2 | 2 | 2 | 2 | 2 |
| | H | 2 | 2 | 2 | 2 | 2 | 2 |
| (M =Mikroorganismus, B = Bakterien, S = Schimmelpilze, H = Hefen) | | | | | | | |

Durch Zugabe einer erfindungsgemäßen Zusammensetzung enthaltend DBDCB und ZPT wird trotz deutlich herabgesetzter Wirkstoffmenge gegenüber den respektiven Einzelwirkstoffen eine effektive Konservierung erzielt, d.h. es wird gegen alle zur Prüfung eingesetzten Mikroorganismenarten eine gute Wirksamkeit beobachtet.

**Patentansprüche**

1. Zusammensetzung, **dadurch gekennzeichnet, dass** sie 1,2-Dibrom-2,4-dicyanobutan (DBDCB) und Zinkpyrithion (ZPT) als wirksame Komponenten enthält.

2. Zusammensetzung gemäß Anspruch 1, **dadurch gekennzeichnet, dass** das Gewichtsverhältnis von DBDCB und ZPT in der Zusammensetzung 100 : 1 bis 1 :100 , bevorzugt 50 :1 bis 1:50, besonders bevorzugt 10 :1 bis 1: 10, noch weiter bevorzugt 4:1 bis 1:4, beträgt.

3. Zusammensetzung gemäß einem der Ansprüche 1 oder 2, **dadurch gekennzeichnet, dass** wenigstens ein weiterer biozider Wirkstoff enthalten ist.

4. Zusammensetzung gemäß Anspruch 3, **dadurch gekennzeichnet, dass** der wenigstens eine weitere biozide Wirkstoff ausgewählt ist aus der Gruppe bestehend aus 1,2-Benzisothiazol-3(2H)-on (BIT), Iodpropargylbutylcarbamat (IPBC) und 2-n-Octylisothiazolin-3-on (OIT).

5. Zusammensetzung gemäß einem der vorangegangenen Ansprüche, **dadurch gekennzeichnet, dass** die Summe von DBDCB, ZPT und des zusätzlich keinen oder wenigstens einen weiteren bioziden Wirkstoffs 1 bis 80 Gew.%, bevorzugt 5 bis 40 Gew.%, bezogen auf das Gesamtgewicht der Zusammensetzung, beträgt.

6. Zusammensetzung gemäß einem der vorangegangenen Ansprüche, **dadurch gekennzeichnet, dass** sie wenigstens einen weiteren Zusatzstoff enthält.

7. Zusammensetzung gemäß Anspruch 6, **dadurch gekennzeichnet, dass** sie wenigstens Zinkoxid als weiteren Zusatzstoff enthält, bevorzugt in einem Gewichtsverhältnis von ZnO zu der Summe der Komponenten DBDCB, ZPT und gegebenenfalls wenigstens eines weiteren bioziden Wirkstoffs von 1: 1 bis 1 : 10.

8. Zusammensetzung gemäß Anspruch 6 oder 7, **dadurch gekennzeichnet, dass** sie wenigstens ein Hilfsmittel als weiteren Zusatzstoff enthält, bevorzugt ausgewählt aus der Gruppe bestehend aus grenzflächenaktive Stoffe, Benetzungsmittel, Emulgatoren, Dispergiermittel, Stabilisatoren, Haftmittel, Verdicker, Spreitmittel, organische Lösungsmittel, Duftstoffe, Farbmittel, Entstaubungsmittel, Puffersubstanzen, Puffersysteme, pH-Wert-Regulatoren, feste Trägerstoffe und Wasser, besonders bevorzugt Wasser.

9. Zusammensetzung gemäß einem der Ansprüche 6 bis 8, **dadurch gekennzeichnet, dass** sie 20 bis 99 Gew.%, besonders bevorzugt 60 bis 95 Gew.%, wenigstens eines weiteren Zusatzstoffes enthält, bezogen auf das Gesamtgewicht der Zusammensetzung.

10. Verfahren zur Herstellung der Zusammensetzung gemäß einem der Ansprüche 1 bis 9, **dadurch gekennzeichnet, dass** man DBDCB und ZPT, gegebenenfalls unter Zugabe wenigstens eines weiteren bioziden Wirkstoffs und gegebenenfalls unter Zugabe wenigstens eines weiteren Zusatzstoffes, miteinander vermischt.

11. Verwendung der Zusammensetzung gemäß einem der Ansprüche 1 bis 9 zum Schutz von technischen Materialien vor Befall und/oder Zerstörung durch Mikroorganismen.

12. Verwendung gemäß Anspruch 11, **dadurch gekennzeichnet, dass** die Zusammensetzung im Bereich von 0,01 bis 5 Gew.%, besonders bevorzugt von 0,05 bis 1,0 Gew.%, bezogen auf das Gewicht des zu schützenden Materials, zum Schutz von technischen Materialien eingesetzt wird.

13. Technische Materialien, **dadurch gekennzeichnet, dass** sie mit einer Zusammensetzung gemäß einem der Ansprüche 1 bis 9 behandelt wurden.

14. Technische Materialien enthaltend eine Zusammensetzung gemäß einem der Ansprüche 1 bis 9.

15. Technische Materialien gemäß einem der Ansprüche 13 oder 14, **dadurch gekennzeichnet, dass** es sich bei den technischen Materialien um Anstrichmittel, Farben und Putze auf wässriger Basis, Bauchemische Produkte z.B Bitumenemulsionen oder Fugendichtungsmassen, Hilfsmittel für die Leder- oder Textilindustrie, Leime und Klebstoffe auf Basis der bekannten tierischen, pflanzlichen oder synthetischen Rohstoffe, Polymerdispersionen auf Basis von z.B. Polyacrylat, Polystrolacrylat, Styrol-butadien, Polyvinylacetat und/ oder Vor-und Zwischenprodukte der chemischen Industrie bei der Farbmittelproduktion und Farbmittellagerung handelt.

Europäisches
Patentamt

European
Patent Office

Office européen
des brevets

# EUROPÄISCHER RECHERCHENBERICHT

Nummer der Anmeldung

EP 14 18 1920

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2012/130822 A1 (ARCH CHEM INC [US]; CLARKE FITZGERALD [GB]; HYDE HELEN MARGARET [GB];) 4. Oktober 2012 (2012-10-04) * das ganze Dokument * ----- | 13,15 | INV. A01N37/34 A01N43/40 A01N59/16 A01P1/00 |
| X,D | US 4 830 657 A (JAKUBOWSKI JOHN A [US] ET AL) 16. Mai 1989 (1989-05-16) * das ganze Dokument * ----- | 13,15 | |
| X | EP 1 523 887 A2 (ROHM & HAAS [US]) 20. April 2005 (2005-04-20) * Absätze [0005], [0014], [0029], [0030] * * Tabellen 4, 7 * ----- | 13,15 | |

RECHERCHIERTE
SACHGEBIETE (IPC)

A01N

Der vorliegende Recherchenbericht wurde für alle Patentansprüche erstellt

| Recherchenort | Abschlußdatum der Recherche | Prüfer |
|---|---|---|
| München | 25. November 2014 | Götz, Gerhard |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 14 18 1920

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-11-2014

| Im Recherchenbericht angeführtes Patentdokument | Datum der Veröffentlichung | Mitglied(er) der Patentfamilie | Datum der Veröffentlichung |
|---|---|---|---|
| WO 2012130822    A1 | 04-10-2012 | AU    2012234326 A1 | 24-10-2013 |
| | | CN     103476253 A | 25-12-2013 |
| | | EP      2690956 A1 | 05-02-2014 |
| | | JP     2014510738 A | 01-05-2014 |
| | | US    2012247364 A1 | 04-10-2012 |
| | | WO    2012130822 A1 | 04-10-2012 |
| US 4830657    A | 16-05-1989 | KEINE | |
| EP 1523887    A2 | 20-04-2005 | BR      0300121 A | 09-09-2003 |
| | | CN     1435095 A | 13-08-2003 |
| | | CN     1836510 A | 27-09-2006 |
| | | CN     1836511 A | 27-09-2006 |
| | | CN     1903033 A | 31-01-2007 |
| | | CN     1903034 A | 31-01-2007 |
| | | CN     1903035 A | 31-01-2007 |
| | | CN     1911016 A | 14-02-2007 |
| | | CN     1911017 A | 14-02-2007 |
| | | DE     60300543 D1 | 02-06-2005 |
| | | DE     60300543 T2 | 23-02-2006 |
| | | EP      1332675 A2 | 06-08-2003 |
| | | EP      1488699 A1 | 22-12-2004 |
| | | EP      1502508 A2 | 02-02-2005 |
| | | EP      1523887 A2 | 20-04-2005 |
| | | EP      1525797 A2 | 27-04-2005 |
| | | EP      1527684 A2 | 04-05-2005 |
| | | EP      1527685 A2 | 04-05-2005 |
| | | EP      1621076 A1 | 01-02-2006 |
| | | JP      4022479 B2 | 19-12-2007 |
| | | JP      4582719 B2 | 17-11-2010 |
| | | JP      4615068 B2 | 19-01-2011 |
| | | JP      4639265 B2 | 23-02-2011 |
| | | JP      4671311 B2 | 13-04-2011 |
| | | JP      4746144 B2 | 10-08-2011 |
| | | JP      4757350 B2 | 24-08-2011 |
| | | JP      4807808 B2 | 02-11-2011 |
| | | JP     2003238319 A | 27-08-2003 |
| | | JP     2007161729 A | 28-06-2007 |
| | | JP     2010215670 A | 30-09-2010 |
| | | JP     2010215671 A | 30-09-2010 |
| | | JP     2010215672 A | 30-09-2010 |
| | | JP     2010229158 A | 14-10-2010 |
| | | JP     2010260870 A | 18-11-2010 |
| | | JP     2010265296 A | 25-11-2010 |
| | | JP     2010265297 A | 25-11-2010 |

EPO FORM P0461

Für nähere Einzelheiten zu diesem Anhang : siehe Amtsblatt des Europäischen Patentamts, Nr.12/82

EP 2 987 406 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4830657 A

- WO 2012130822 A1

**In der Beschreibung aufgeführte Nicht-Patentliteratur**

- **F.C. KULL ; P.C. ELISMAN ; H.D. SYLWESTROWICZ ; P.K. MAYER.** *Appl. Microbiol.,* 1961, vol. 9, 538